# EUROPEAN PATENT SPECIFICATION

(11) **EP 1 277 782 B1**
(45) Date of publication and mention of the grant of the patent: **21.11.2007**
(21) Application number: 02254632.9
(22) Date of filing: 02.07.2002
(51) Int. Cl.: C08G 65/32, C08L 71/02, C04B 24/32, C04B 24/26

(54) **Multi-functional cement dispersants and hydraulic cement compositions**
Multifunktionelle Zementdispergiermittel und hydraulische Zementzusammensetzungen
Dispersants multi-fonctionnels pour ciment et compositions de ciment hydraulique

(30) Priority: 02.07.2001 JP 2001200653; 27.03.2002 JP 2002087683
(43) Date of publication of application: 22.01.2003
(73) Proprietor: Taiheiyo Cement Kabushiki Kaisha, Tokyo-to (JP); NMB Co.,Ltd, Tokyo-to (JP); Takemoto Yushi Kabushiki Kaisha, Gamagouri-shi Aichi-ken (JP)
(72) Inventor: Nakanishi, Hiroshi, Sakura-shi, Chiba-ken (JP); Ishimori, Masaki, Sakura-shi, Chiba-ken (JP); Yaguchi, Minoru, Chigasaki-shi, Kanagawa-Ken (JP); Sugiyama, Tomomi, Chigasaki-shi, Kanagawa-ken (JP); Kinoshita, Mitsuo, Gamagouri-shi, Aichi-ken (JP); Tamaki, Shinji, Gamagouri-shi, Aichi-ken (JP); Sugamata, Takumi, 2722 Hagizono Chigasaki-shi Kanagawa-ken (JP)
(74) Representative: Smyth, Gyles Darren

(56) References cited:
- EP-A- 0 639 592
- EP-A- 0 850 963
- US-A- 5 739 212
- US-A- 5 985 989
- PATENT ABSTRACTS OF JAPAN vol. 1995, no. 09, 31 October 1995 (1995-10-31) & JP 07 157348 A (NIPPON OIL & FATS CO LTD), 20 June 1995 (1995-06-20)
- PATENT ABSTRACTS OF JAPAN vol. 1997, no. 03, 31 March 1997 (1997-03-31) & JP 08 295547 A (MARUBISHI YUKA KOGYO KK), 12 November 1996 (1996-11-12)

## Description

### Technical Field of the Invention

This invention relates to multi-functional cement dispersants and hydraulic cement compositions. Hydraulic cement compositions such as mortar and concrete are required to have several characteristics simultaneously. Not only should they have a superior fluidity, but the fluidity should not deteriorate quickly over time, and hardened objects obtained therefrom should have a superior early strength, a small dry shrinkage ratio and a high resistance against freezing and thawing. This invention relates to multi-functional cement dispersants capable of providing such multiple functions simultaneously to hydraulic cement compositions, as well as hydraulic cement compositions possessing such multiple functions simultaneously.

### Background of the Invention

Many kinds of compounds of polycarboxylic acids have been known as cement dispersants capable of providing hydraulic cement compositions with superior fluidity which does not deteriorate over the time (US Patents 4,471,100 and 4,962,173, EP-A-753,488, and Japanese patents 2507280, 2541218 and 2676854). These prior art cement dispersants were not satisfactory because they were not sufficiently effective in reducing the dry shrinkage of hardened objects obtained therefrom and in providing resistance to such hardened objects against freezing and thawing. Many kinds of agents for reducing dry shrinkage for use with hydraulic cement compositions have also been known (US Patent 4,547,223, Japanese Patent Publications Tokko 56-51148 and 6-6500) and are being used together with such compounds of polycarboxylic acids as mentioned above in order to improve conditions when they are used as cement dispersants. In such applications, however, the work of preparing the hydraulic cement compositions becomes complicated and the quality control becomes difficult. If it is attempted to obtain a practical effect in reducing dry shrinkage, it is necessary to add a large amount of such an agent and this affects the cost of production, but there still remains the problem of low efficiency in providing resistance against freezing and thawing to hardened objects. Although cement dispersants with the effect of reducing dry shrinkage of hardened objects have been known (Japanese Patent Publications Tokkai 8-268741 and 2000-34151), such prior art cement dispersants have the problems that hardened objects obtained therewith do not show early strength and are still not sufficiently effective in providing hardened objects with resistance against freezing and thawing.
Other cement dispersants are disclosed in EP-A-0 850 963, US-A-5 985 989, EP-A-0 639 592, JP 07 157348 A, JP 08 295547 A and US-A-5 739 212.

### Summary of the Invention

An object of the invention is to provide multi-functional cement dispersants such that hydraulic cement compositions produced therewith have a superior fluidity which does not deteriorate over time and hardened objects obtained therefrom have a superior early strength, a low dry shrinkage and a high resistance against freezing and thawing.

The invention is based on the discovery by the present inventors as a result of their diligent researches in view of the object described above that graft copolymers of a certain kind or their salts should be used.

The invention relates to multi-functional cement dispersants characterized as comprising graft copolymers obtainable by the following two steps which are herein referred to as the "first step" and the "second step". The first step is a step of obtaining copolymers with number average molecular weight 3000-50000 by radical polymerization of a mixture of radical polymerizable monomers consisting of maleic anhydride and monomers of the form given by Formula 1 given below, together in an amount of 85 molar % or more of the mixture and at molar ratio of 50/50-80/20, Formula 1 being:

CH₂=CH-CH₂-O-A-O-R (Formula 1)

where R is acyl group with 1-18 carbon atoms, alkyl group with 1-3 carbon atoms or hydrogen, and A is a residual group obtained by removing all hydroxyl groups from polyalkylene glycol with repetition number of oxyalkylene units equal to 5-80, the oxyalkylene units consisting only of oxyethylene units or of both oxyethylene units and oxypropylene units.

The second step is a step of obtaining the graft copolymers by a graft reaction, in the presence of a basic catalyst, of 100 weight parts of the copolymers obtained in the first step and 3-35 weight parts of one or more selected from the group consisting of polyoxyalkylene monoalkylester (having a block addition of 1-4 moles of ethylene oxide and 1-4 moles of propylene oxide to one mole of aliphatic carboxylic acid with 1-6 carbon atoms), polyoxyalkylene monoalkylether (having a block addition of 1-4 moles of ethylene oxide and1-4 moles of propylene oxide to one mole of aliphatic alcohol with 3-5 carbon atoms), and polypropyleneglycol with repetition number of oxypropylene units equal to 4-10.

The invention also relates to multi-functional cement dispersants characterized as comprising salts of graft copolymers obtainable by the aforementioned two steps and also still another step which is herein referred to as the "third step" and is a step of obtaining the salts of graft copolymers by neutralizing the graft copolymers obtained in the second step with one or more selected from the group consisting of alkali metal hydroxide, alkali earth metal hydroxide and amines.

The invention further relates to hydraulic cement products characterized as being obtained by adding any of aforementioned multi-functional cement dispersants in an amount of 0.05-4.0 weight parts to 100 weight parts of cement.

In summary, multi-functional cement dispersants comprising (1) graft copolymers obtained by the aforementioned first and second steps and (2) salts of graft copolymers obtained by the aforementioned first, second and third steps are both within the scope of this invention. The first step is for obtaining copolymers by radical polymerization of a mixture of radical polymerizable monomers. According to this invention, the first step uses a mixture containing maleic anhydride and monomers of Formula 1 at a molar ratio of 50/50-80/20, and preferably 60/40-70/30.

Examples ofwhat A may be in Formula 1 include (1) residual groups obtained by removing all hydroxyl groups from (poly)ethylene glycol of which oxyalkylene units consist only of oxyethylene units, and (2) residual groups obtained by removing all hydroxyl groups from (poly)ethylene (poly)propylene glycol of which oxyalkylene units consists of both oxyethylene units and oxypropylene units. In the case of (2), the combination of oxyethylene units and oxypropylene units may be by random addition or block addition, but (1) is preferred. The repetition number of the oxyalkylene units in A is 5-80, but it is preferably 15-70.

Examples of what R may be in Formula 1 include (1) acyl groups with 1-18 carbon atoms such as formyl group, acetyl group, propionyl group, butyryl group, isobutyryl group, valeryl group, isovaleryl group, hexanoyl group, heptanoyl group, octanoyl group, nonanoyl group, decanoyl group, hexadecanoyl group, octadecanoyl group, hexadecenoyl group and octadecenoyl group, (2) alkyl groups with 1-3 carbon atoms such as methyl group, ethyl group, propyl group an isopropyl group, and (3) hydrogen. Among these, acyl groups with 1-18 carbon atoms are preferred and acetyl group is particularly preferred.

Practical examples of monomers of Formula 1 used in the first step according to this invention include (1) α-allyl-ω-alkyloyl-(poly)oxyethylene, (2) α-allyl-ω-alkyloyl-(poly)oxyethylene (poly)oxypropylene, (3) α-allyl-ω-alkyl(with1-3 carbon atoms)-(poly)oxyethylene, (4) α-allyl-ω-alkyl (with 1-3 carbon atoms)-(poly)oxyethylene (poly)oxypropylene, (5) α-allyl-ω-hydroxy-(poly)oxyethylene, and (6) α-allyl-ω-hydroxy-(poly)oxyethylene (poly)oxypropylene.

The mixture of radical polymerizable monomers in the first step contains maleic anhydride and monomers of Formula 1 together in an amount of 85 molar % or more, and preferably 90molar % or more. In other words, radical polymerizable monomers of other types may be contained in an amount of less than 15 molar %, or preferably less than 10 molar %. Examples of such other radical polymerizable monomers include styrene, vinyl acetate, acrylic acid, acrylic acid salts, acrylic acid alkyl esters, (meth)allyl sulfonic acid and (meth)allyl sulfonic acid salts. Among these, styrene is preferred.

In the first step, a radical initiator is added to the mixture described above to cause radical polymerization and to obtain copolymers with number average molecular weight (hereinafter Pullulan converted by GPC method) of 3000-50000, or preferably 5000-25000. Known methods may be used for this radical polymerization such as (1) methods of radical polymerization of a mixture of radical polymerizable monomers without the use of a solvent and (2) methods of radical polymerization by dissolving a mixture of radical polymerizable monomers in a solvent such as benzene, toluene, xylene, methyl isobutyl ketone and dioxyane. Of the above, methods according to (1) are preferred, and it is more preferred to obtain copolymers with average numerical molecular weight of 5000-25000 by a method of (1). A method (1) may be carried out by placing a mixture of polymerizable monomers in a reactor can and adding a radical initiator in a nitrogen atmosphere to cause a radical polymerization reaction at 60-90°C for 5-10 hours. In order to obtain the desired copolymers by controlling the radical polymerisation reaction either by a method (1) without using a solvent or by a method (2) by using a solvent, the types and amounts of radical initiator and radical chain transfer agent to be used, polymerization temperature and polymerization time are appropriately selected. Examples of radical initiators that may be used in this invention include azo initiators such as azobis isobutylonitrile and 2,2'-azobis(4-methoxy-2,4-dimethylvaleronitrile) and organic peroxide initiators such as benzoyl peroxide, lauroyl peroxide and cumene hydroperoxide.

In the second step, graft copolymers are obtained by a graft reaction of one or more selected from polyoxyalkylene monoalkylester, polyoxyalkylene monoalkylether and polypropyleneglycol with the copolymers obtained in the first step. According to the present invention, what is obtained by a block addition of 1-4 moles of ethylene oxide and 1-4 moles of propylene oxide to 1 mole of aliphatic carboxylic acid with 1-6 carbon atoms is used as the polyoxyalkylene monoalkylester of the second step, and what is obtained by a block addition of 1-4 moles of ethylene oxide and 1-4 moles of propylene oxide to 1 mole of aliphatic alcohol with 3-5 carbon atoms is used as the polyoxyalkylene monoalkylether. As for polypropyleneglycol, examples with repetition number of oxypropylene units of from 4 to 10 are used.

Examples of aliphatic carboxylic acids with 1-6 carbon atoms which may be used for producing the polyoxyalkylene monoalkylester for the second step include formic acid, acetic acid, propionic acid, butyric acid, valerianic acid and capronic acid. Among these, acids with from 3 to 5 carbon atoms, such as propionic acid, butyric acid and valerianic acid are preferred. Examples of aliphatic alcohols with 3-5 carbon atoms which may be used for producing the polyoxyalkylene monoalkylether for the second step include propanol, butanol and pentanol.

The polyoxyalkylene monoalkylester to be used in the second step is, as explained above, what may be obtained by block addition of 1-4 moles of ethylene oxide and 1-4 moles of propylene oxide to one mole of aliphatic acid with 1-6 carbon atoms, and what may be obtained by block addition of 2-4 moles of ethylene oxide and 2-4 moles of propylene oxide to one carboxylic acid with 3-5 carbon atoms is preferred. The polyoxyalkylene monoalkylether to be used in the second step is, as explained above, what may be obtained by block addition of 1-4 moles of ethylene oxide and 1-4 moles of propylene oxide to 1 mole of aliphatic alcohol with 3-5 carbon atoms. There is no particular limitation as to the order of addition of ethylene oxide and propylene oxide to aliphatic carboxylic acid and aliphatic alcohol, but those obtained by adding propylene oxide first and then ethylene oxide are preferred. The polypropyleneglycol to be used in the second step is what may be obtained by an addition of 4-10 moles of propylene oxide. Polyoxyalkylene monoalkylester, polyoxyalkylene monoalkylether and polypropyleneglycol described above can be synthesized by a conventionally known method.

In the second step, graft copolymers are obtained by a graft reaction of 3-35 weight parts, and preferably 5-25 weight parts, of one or more of polyoxyalkylene monoalkylester, polyoxyalkylene monoalkylether and polypropyleneglycol with 100 weight parts of the copolymers obtained in the first step. Conventionally known methods may be used for such a graft reaction. For example, graft copolymers can be obtained by placing the copolymers obtained in the first step, one or more selected from polyoxyalkylene monoalkylester, polyoxyalkylene monoalkylether and polypropyleneglycol, and a basic catalyst inside a reactor and carrying out a graft reaction at 100°C for 4-6 hours after a nitrogen atmosphere is established. Conventionally known basic catalysts which are used for ring-opening esterification reactions of anhydrous acid and alcohol may be used, but amine catalysts are preferred, and lower alkylamines are particularly preferred. The viscosity of 40% aqueous solution of the obtained graft copolymer at 20°C is preferably 60-700MPa·s.

In the third step, salts of graft copolymers are produced by completely or partially neutralizing the graft copolymers obtained in the second step by using a basic compound. Examples of such a basic compound include (1) alkali metal hydroxides such as sodium hydroxide and potassium hydroxide, (2) alkali earth metal hydroxides such as calcium hydroxide and magnesium hydroxide, and (3) amines such as ammonia and triethanolamine. One or more kinds of these compounds may be used.

Multi-functional cement dispersants ofthis invention are applicable to hydraulic cement compositions such as mortar and concrete. They are capable of not only providing them with a superior fluidity with small loss of fluidity over time, but also of producing hardened objects from such hydraulic cement compositions having a superior early strength, a reduced dry shrinkage and a high resistance against freezing and thawing.

Next, hydraulic cement compositions embodying this invention are described. The hydraulic cement compositions embodying this invention, like other ordinary hydraulic cement compositions, include cement, aggregates and water but are characterized as containing a multi-functional cement dispersant of this invention in an amount of 0.05-4.0 weight parts, or preferably 0.1-2.0 weight parts, per 100 weight parts of cement.

Examples of cement which may be used to produce hydraulic cement compositions embodying this invention include different kinds of portland cement such as normal portland cement, high early portland cement, moderate heat portland cement and belite-rich portland cement, and different kinds of blended cement such as blast-furnace slag cement, fly ash cement and silica pozzolan cement, as well as alumina cement. Powder materials such as lime stone powder, calcium carbonate, silica fume, blast-furnace slag powder and fly ash may also be used in part as a substitute for cement.

Methods of producing hydraulic cement compositions of this invention include: (1) methods of mixing cement and aggregates first and then mixing a multi-functional cement dispersant of this invention with water with kneading; (2) methods of mixing cement, aggregates and a multi-functional cement dispersant of this invention first and then adding water with kneading; and (3) methods of mixing cement, aggregates, a multi-functional cement dispersant of this invention and water simultaneously and kneading them together. The multi-functional cement dispersants of this invention may be used either as an aqueous solution or in a powder form.

Hydraulic cement compositions embodying this invention may also contain other additives such as an agent for controlling air content, a setting accelerator, a setting retarder, a thickener, a waterproofing agent, an antiseptic agent and a rust preventive as long as they have no adverse effect on the functions of the multi-functional cement dispersant. Hydraulic cement compositions of this invention have superior fluidity which is not reduced with time and hardened objects produced therewith can exhibit a superior early strength, a low dry shrinkage and a high resistance against freezing and thawing.

### Embodiments of the Invention

The following embodiments may be considered for describing the present invention:
(1) Multi-functional cement dispersant comprising graft copolymer (P-1) obtained by the first step and the second step described below:
   The first step: Step of obtaining copolymers with number average molecular weight of 13000 by radical polymerization of a mixture of radical polymerizable monomers containing a total of 100 molar % of maleic anhydride and α-allyl-ω-acetyl-polyoxyethylene (with repetition number of oxyethylene units equal to 30, hereinafter written as n=30) at a molar ratio of 65/35.
   The second step: Step of obtaining graft copolymers (P-1) by a graft reaction, in the presence of tributylamine as catalyst, of 16 weight parts of polyoxyalkylene monoalkylester having a block addition of 2 moles of ethylene oxide and 2 moles of propylene oxide per 1 mole of butyric acid to 100 weight parts of the copolymer obtained in the first step.
(2) Multi-functional cement dispersant comprising graft copolymer (P-2) obtained by the first step and the second step described below:
   The first step: Step of obtaining copolymers with number average molecular weight of 13000 by radical polymerization of a mixture of radical polymerizable monomers containing a total of 100 molar % of maleic anhydride and α-allyl-ω-acetyl-polyoxyethylene (n=30) at a molar ratio of 65/35.
   The second step: Step of obtaining graft copolymers (P-2) by a graft reaction, in the presence of tributylamine as catalyst, of 10 weight parts of polyoxyalkylene monoalkylester of aforementioned Embodiment (1) to 100 weight parts of the copolymer obtained in the first step.
(3) Multi-functional cement dispersant comprising graft copolymer (P-3) obtained by the first step and the second step described below:
   The first step: Step of obtaining copolymers with number average molecular weight of 18500 by radical polymerization of a mixture of radical polymerizable monomers containing a to al of 100 molar % of maleic anhydride and α-allyl-ω-acetyl-polyoxyethylene (n=50) at a molar ratio of 70/30.
   The second step: Step of obtaining graft copolymers (P-3) by a graft reaction, in the presence of tributylamine as catalyst, of 9 weight parts of polyoxyalkylene monoalkylester of aforementioned Embodiment (1) to 100 weight parts of the copolymer obtained in the first step.
(4) Multi-functional cement dispersant comprising graft copolymer (P-4) obtained by the first step and the second step described below:
   The first step: Step of obtaining copolymers with number average molecular weight of 8200 by radical polymerization of a mixture of radical polymerizable monomers containing a total of 100 molar % of maleic anhydride and α-allyl-ω-acetyl-polyoxyethylene (n=17) at a molar ratio of 60/40.
   The second step: Step of obtaining graft copolymers (P-4) by a graft reaction, in the presence of tributylamine as catalyst, of 24 weight parts of polyoxyalkylene monoalkylester having a block addition of 2 moles of ethylene oxide and 3 moles of propylene oxide per 1 mole of propionic acid to 100 weight parts of the copolymer obtained in the first step.
(5) Multi-functional cement dispersant comprising graft copolymer (P-5) obtained by the first step and the second step described below:
   The first step: Step of obtaining copolymers with number average molecular weight of 12700 by radical polymerization of a mixture of radical polymerizable monomers containing a total of 100 molar % of maleic anhydride and α-allyl-ω-lauroyl-polyoxyethylene (n=60) at a molar ratio of 65/35.
   The second step: Step of obtaining graft copolymers (P-5) by a graft reaction, in the presence of tributylamine as catalyst, of 10 weight parts of polyoxyalkylene monoalkylester of aforementioned Embodiment (4) to 100 weight parts of the copolymer obtained in the first step.
(6) Multi-functional cement dispersant comprising graft copolymer (P-6) obtained by the first step and the second step described below:
   The first step: Step of obtaining copolymers with number average molecular weight of 23000 by radical polymerization of a mixture of radical polymerizable monomers containing a total of 100 molar % of maleic anhydride, α-allyl-ω-acetyl-polyoxyethylene (n=50) (n-50) and styrene at a molar ratio of 57/38/5.
   The second step: Step of obtaining graft copolymers (P-6) by a graft reaction, in the presence of tributylamine as catalyst, of 12 weight parts of polyoxyalkylene monoalkylester of aforementioned Embodiment (4) to 100 weight parts of the copolymer obtained in the first step.
(7) Multi-functional cement dispersant comprising graft copolymer (P-7) obtained by the first step and the second step described below:
   The first step: Step of obtaining copolymers with number average molecular weight of 19500 by radical polymerization of a mixture of radical polymerizable monomers containing a total of 100 molar % of maleic anhydride, α-allyl-ω-acetyl-polyoxyethylene (n=30) and styrene at a molar ratio of 58/37/5.
   The second step: Step of obtaining graft copolymers (P-7) by a graft reaction, in the presence of tributylamine as catalyst, of 9 weight parts of polyoxyalkylene monoalkylester of aforementioned Embodiment (1) to 100 weight parts of the copolymer obtained in the first step.
(8) Multi-functional cement dispersant comprising graft copolymer (P-8) obtained by the first step and the second step described below:
   The first step: Step of obtaining copolymers with number average molecular weight of 9000 by radical polymerization of a mixture of radical polymerizable monomers containing a total of 100 molar % of maleic anhydride, α-allyl-ω-acetyl-polyoxyethylene (n=17) and styrene at a molar ratio of 65/30/5.
   The second step: Step of obtaining graft copolymers (P-8) by a graft reaction, in the presence of tributylamine as catalyst, of 18 weight parts of polyoxyalkylene monoalkylester of aforementioned Embodiment (1) to 100 weight parts of the copolymer obtained in the first step.
(9) Multi-functional cement dispersant comprising graft copolymer (P-9) obtained by the first step and the second step described below:
   The first step: Step of obtaining copolymers with number average molecular weight of 13000 by radical polymerization of a mixture of radical polymerizable monomers containing a total of 100 molar % of maleic anhydride and α-allyl-ω-methyl-polyoxyethylene (n=35) at a molar ratio of 65/35.
   The second step: Step of obtaining graft copolymers (P-9) by a graft reaction, in the presence of tributylamine as catalyst, of 14 weight parts of polyoxyalkylene monoalkylether having a block addition of 2 moles of ethylene oxide and 2 moles of propylene oxide per 1 mole of butyl alcohol to 100 weight parts of the copolymer obtained in the first step.
(10) Multi-functional cement dispersant comprising graft copolymer (P-10) obtained by the first step and the second step described below:
   The first step: Step of obtaining copolymers with number average molecular weight of 13000 by radical polymerization of a mixture of radical polymerizable monomers containing a total of 100 molar % of maleic anhydride and α-allyl-ω-hydroxy-polyoxyethylene (n=60) polyoxypropylene (with repetition number of oxypropylene units equal to 5, hereinafter written as m=5) at a molar ratio of 68/32.
   The second step: Step of obtaining graft copolymers (P-10) by a graft reaction, in the presence of tributylamine as catalyst, of 7 weight parts of polyoxyalkylene monoalkylether of aforementioned Embodiment (9) to 100 weight parts of the copolymer obtained in the first step.
(11) Multi-functional cement dispersant comprising graft copolymer (P-11) obtained by the first step and the second step described below:
   The first step: Step of obtaining copolymers with number average molecular weight of 13000 by radical polymerization of a mixture of radical polymerizable monomers containing a total of 100 molar % of maleic anhydride and α-allyl-ω-acetyl-polyoxyethylene (n=30) at a molar ratio of 65/35.
   The second step: Step of obtaining graft copolymers (P-11) by a graft reaction, in the presence oftributylamine as catalyst, of 14 weight parts of polypropyleneglycol (m=7) to 100 weight parts of the copolymer obtained in the first step.
(12) Multi-functional cement dispersant comprising graft copolymer (P-12) obtained by the first step and the second step described below:
   The first step: Step of obtaining copolymers with number average molecular weight of 13000 by radical polymerization of a mixture of radical polymerizable monomers containing a total of 100 molar % of maleic anhydride and α-allyl-ω-acetyl-polyoxyethylene (n=30) at a molar ratio of 65/35.
   The second step: Step of obtaining graft copolymers (P-12) by a graft reaction, in the presence of tributylamine as catalyst, of 20 weight parts of polypropyleneglycol of aforementioned Embodiment (11) to 100 weight parts of the copolymer obtained in the first step.
(13) Multi-functional cement dispersant comprising graft copolymer (P-13) obtained by the first step and the second step described below:
   The first step: Step of obtaining copolymers with number average molecular weight of 13000 by radical polymerization of a mixture of radical polymerizable monomers containing a total of 100 molar % of maleic anhydride and α-allyl-ω-acetyl-polyoxyethylene (n=30) at a molar ratio of 65/35.
   The second step: Step of obtaining graft copolymers (P-13) by a graft reaction, in the presence of tributylamine as catalyst, of 7 weight parts of polypropyleneglycol of aforementioned Embodiment (11) to 100 weight parts of the copolymer obtained in the first step.
(14) Multi-functional cement dispersant comprising graft copolymer (P-14) obtained by the first step and the second step described below:
   The first step: Step of obtaining copolymers with number average molecular weight of 8200 by radical polymerization of a mixture of radical polymerizable monomers containing a total of 100 molar % of maleic anhydride and α-allyl-ω-acetyl-polyoxyethylene (n=17) at a molar ratio of 60/40.
   The second step:Step of obtaining graft copolymers (P-14) by a graft reaction, in the presence of tributylamine as catalyst, of 12 weight parts of polypropyleneglycol (m=10) to 100 weight parts of the copolymer obtained in the first step.
(15) Multi-functional cement dispersant comprising graft copolymer (P-15) obtained by the first step and the second step described below:
   The first step: Step of obtaining copolymers with number average molecular weight of 12400 by radical polymerization of a mixture of radical polymerizable monomers containing a total of 100 molar % of maleic anhydride and α-allyl-ω-acetyl-polyoxyethylene (n=50) polyoxypropylene (m=5) at a molar ratio of 70/30.
   The second step: Step of obtaining graft copolymers (P-15) by a graft reaction, in the presence of tributylamine as catalyst, of 10 weight parts of polypropyleneglycol (m=4) to 100 weight parts of the copolymer obtained in the first step.
(16) Multi-functional cement dispersant comprising graft copolymer (P-16) obtained by the first step and the second step described below:
   The first step: Step of obtaining copolymers with number average molecular weight of 19600 by radical polymerization of a mixture of radical polymerizable monomers containing a total of 100 molar % of maleic anhydride and α-allyl-ω-lauroyl-polyoxyethylene (n=60) at a molar ratio of 65/35.
   The second step: Step of obtaining graft copolymers (P-16) by a graft reaction, in the presence of tributylamine as catalyst, of 23 weight parts of polypropyleneglycol of aforementioned Embodiment (11) to 100 weight parts of the copolymer obtained in the first step.
(17) Multi-functional cement dispersant comprising graft copolymer (P-17) obtained by the first step and the second step described below:
   The first step: Step of obtaining copolymers with number average molecular weight of 22300 by radical polymerization of a mixture of radical polymerizable monomers containing a total of 100 molar % of maleic anhydride and α-allyl-ω-methyl-polyoxyethylene (n=35) at a molar ratio of 55/45.
   The second step: Step of obtaining graft copolymers (P-17) by a graft reaction, in the presence of tributylamine as catalyst, of 9 weight parts of polypropyleneglycol of aforementioned Embodiment (11) to 100 weight parts of the copolymer obtained in the first step.
(18) Multi-functional cement dispersant comprising graft copolymer (P-18) obtained by the first step and the second step described below:
   The first step: Step of obtaining copolymers with number average molecular weight of 28500 by radical polymerization of a mixture of radical polymerizable monomers containing a total of 100 molar % of maleic anhydride, α-allyl-ω-acetyl-polyoxyethylene (n=30) and styrene at a molar ratio of 60/35/5.
   The second step: Step of obtaining graft copolymers (P-18) by a graft reaction, in the presence of tributylamine as catalyst, of 18 weight parts of polypropyleneglycol of aforementioned Embodiment (11) to 100 weight parts of the copolymer obtained in the step.
(19) Multi-functional cement dispersant comprising salt (P-19) of graft copolymer obtained by the first step and the second step of aforementioned Embodiment (1) and the third step described below:
   The third step: Step of obtaining salt (P-19) of copolymer by partially neutralizing graft copolymer (P-1) obtained in the second step with sodium hydroxide.
(20) Multi-functional cement dispersant comprising salt (P-20) of graft copolymer obtained by the first step and the second step of aforementioned Embodiment (3) and the third step described below:
   The third step:Step of obtaining salt (P-20) of copolymer by partially neutralizing graft copolymer (P-3) obtained in the second step with sodium hydroxide.
(21) Multi-functional cement dispersant comprising salt (P-21) of graft copolymer obtained by the first step and the second step of aforementioned Embodiment (6) and the third step described below:
   The third step: Step of obtaining salt (P-21) of copolymer by partially neutralizing graft copolymer (P-6) obtained in the second step with sodium hydroxide.
(22) Multi-functional cement dispersant comprising salt (P-22) of graft copolymer obtained by the first step and the second step of aforementioned Embodiment (11) and the third step described below:
   The third step: Step of obtaining salt (P-22) of copolymer by partially neutralizing graft copolymer (P-11) obtained in the second step with sodium hydroxide.
(23) Multi-functional cement dispersant comprising salt (P-23) of graft copolymer obtained by the first step and the second step of aforementioned Embodiment (17) and the third step described below:
   The third step: Step of obtaining salt (P-23) of copolymer by partially neutralizing graft copolymer (P-17) obtained in the second step with sodium hydroxide.
   The following is mentioned as an embodiment of hydraulic cement composition according to this invention:
(24) Concrete containing cement by 326kg/m³, fine aggregates by 862kg/m³, coarse aggregates by 951kg/m³ and water 163kg/m³ and also containing any one of the multi-functional cement dispersant (1)-(23) described above in an amount of 0.05-4.0 weight parts per 100 weight parts of cement.

In what follows, the invention will be described by way of the results of test examples but it goes without saying that the invention is not limited to these examples. In the following, "parts" will mean "weight parts" and "%" will mean "weight %" unless specifically described to be otherwise.

### Examples

### Part 1: Synthesis of graft copolymers

### Test Example 1 (Synthesis of graft copolymer (P-1)

After maleic anhydride 186g (1.9 moles) and α-allyl-ω-acetyl-polyoxyethylene (n=30) 1432g (1.0 mole) were placed inside a reactor and dissolved uniformly with stirring, the atmosphere was replaced with nitrogen. A reaction was then started by adding azobis isobutylonitrile 4g while the temperature of the reacting system was kept at 80°C by means of a temperature bath. After the reaction was started, azobis isobutylonitrile 8g was further added by portions and the radical polymerization reaction was continued for 6 hours until it was concluded. The copolymerized substance thus obtained was analyzed and found to be copolymer (P-1) with number average molecular weight of 13000 containing maleic acid and α-allyl-ω-acetyl-polyoxyethylene (n=30) at molar ratio of 65/35 as converted to original materials. Next, this copolymerized substance 100 parts was placed inside a reactor vessel together with 16 parts of polyoxyalkylene monoalkylester with block addition of ethylene oxide 2 moles and propylene oxide 2 moles to 1 mole of butyric acid and 6 parts of tributylamine as catalyst and the atmosphere was replaced with nitrogen gas. An esterification reaction was carried out with stirring for 4 hours at 100°C to obtain graft copolymer (P-1). The viscosity of 40% aqueous solution of this graft copolymer (P-1) at 20°C was 92MPa·s.

### Test Examples 2-18 and Comparison Examples 1-15 (Synthesis of graft copolymers (P-2)-(P-18) and (R-1)-(R-15)

Graft copolymers (P-2)-(P-18) and (R-1)-(R-15) were similarly obtained.

### Test Example 19 (Preparation of salt (P-19) of graft copolymer)

Graft copolymer (P-1) obtained in Test Example 1 100 parts was dissolved in water 148 parts to obtain an aqueous solution to which a 20% aqueous solution of sodium hydroxide 6.1 parts was gradually added with stirring to partially neutralize graft copolymer (P-1) to prepare salt (P-19) of graft copolymer.

### Test Examples 20-23 (Preparation of salts (P-20)-(P-23) of graft copolymer)

Salt (P-20) of graft copolymer was prepared from graft copolymer (P-3) obtained in Test Example 3, salt (P-21) of graft copolymer was prepared from graft copolymer (P-6) obtained in Test Example 6, salt (P-22) of graft copolymer was prepared from graft copolymer (P-11) obtained in Test Example 11, and salt (P-23) of graft copolymer was prepared from graft copolymer (P-17) obtained in Test Example 17, in the same manner as salt (P-19) was obtained. The graft copolymers and salts of graft copolymers thus prepared are summarized in Table 1.

**Table 1**

| | Kind of Graft Copolymer, etc. | Copolymer in First Step | | | | Copolymer in second step | | |
|---|---|---|---|---|---|---|---|---|
| | | Copolymerization ratio (molar %) | | | Number average molecular weight | *1 | *2 | *3 |
| | | Maleic anhydride | Monomer of Formula 1 | Other Monomers | | | | |
| | | Molar % | Kind/Molar % | Kind/Molar % | | | | |
| Test | | | | | | | | |
| Example | | | | | | | | |
| 1 | P-1 | 65 | B-1/35 | | 13000 | D-1 | 16 | 92 |
| 2 | P-2 | 65 | B-1/35 | | 13000 | D-1 | 10 | 108 |
| 3 | P-3 | 70 | B-2/30 | | 18500 | D-1 | 9 | 145 |
| 4 | P-4 | 60 | B-3/40 | | 8200 | D-2 | 24 | 79 |
| 5 | P-5 | 65 | B-4/35 | | 12700 | D-2 | 10 | 104 |
| 9 | P-9 | 65 | B-5/35 | | 13000 | D-3 | 14 | 113 |
| 10 | P-10 | 68 | B-6/32 | | 13000 | D-3 | 7 | 138 |
| 11 | P-11 | 65 | B-1/35 | | 13000 | D-4 | 14 | 230 |
| 12 | P-12 | 65 | B-1/35 | | 13000 | D-4 | 20 | 385 |
| 13 | P-13 | 65 | B-1/35 | | 13000 | D-4 | 7 | 197 |
| 14 | P-14 | 60 | B-3/40 | | 8200 | D-5 | 12 | 174 |
| 15 | P-15 | 70 | B-7/30 | | 12400 | D-6 | 10 | 323 |
| 16 | P-16 | 65 | B-4/35 | | 19600 | D-4 | 23 | 462 |
| 17 | P-17 | 55 | B-5/45 | | 22300 | D-4 | 9 | 265 |
| 19 | P-19 | 65 | B-1/35 | | 13000 | D-1 | 16 | 127 |
| 20 | P-20 | 70 | B-2/30 | | 18500 | D-1 | 9 | 172 |
| 22 | P.22 | 65 | B-1/35 | | 13000 | D-4 | 14 | 258 |
| 23 | P-23 | 55 | B-5/45 | | 22300 | D-4 | 9 | 293 |

| Comparison | | | | | | | | |
|---|---|---|---|---|---|---|---|---|
| Example | | | | | | | | |
| 1 | R-1 | 65 | B-1/35 | | 13000 | D-1 | 2 | 110 |
| 2 | R-2 | 65 | B-1/35 | | 13000 | D-1 | 40 | 95 |
| 3 | R-3 | 60 | B-2/40 | | 20100 | DR-1 | 10 | 232 |
| 4 | R-4 | 70 | B-4/30 | | 18000 | DR-2 | 20 | 154 |
| 5 | R-5 | 60 | B-3/35 | C-1/5 | 15000 | DR-3 | 15 | 175 |
| 6 | R-6 | 45 | B-5/55 | | 11600 | D-2 | 12 | 137 |
| 7 | R-7 | 60 | BR-1/40 | | 22500 | D-1 | 5 | 316 |
| 8 | R-8 | 65 | B-1/35 | | 13000 | - | - | 118 |
| 9 | R-9 | 65 | B-1/35 | | 13000 | D-4 | 2 | 141 |
| 10 | R-10 | 65 | B-1/35 | | 13000 | D-4 | 40 | 1650 |
| 11 | R-11 | 60 | B-3/40 | | 8200 | DR-4 | 15 | 215 |
| 12 | R-12 | 70 | B-7/30 | | 12400 | DR-5 | 10 | 138 |
| 13 | R-13 | 65 | B-1/35 | | 13000 | DR-6 | 14 | *4 |
| 14 | R-14 | 45 | B-4/55 | | 21000 | D-5 | 15 | 365 |
| 15 | R-15 | 60 | B-5/35 | C-1/5 | 19500 | D-6 | 2 | 165 |

| | | | | | | | | |
|---|---|---|---|---|---|---|---|---|
| In Table 1: *1: Kind of polyoxyalkylene monoalkylester, polyoxyalkylene monoalkylether or polypropyleneglycol; *2: Part of polyoxyalkylene monoalkylester, polyoxyalkylene monoalkylether or polypropyleneglycol reacted with 100 parts of copolymer obtained in the first step; *3: Viscosity (in MPa·s) at 20°C of 40% aqueous solution of graft copolymer obtained in the second step; *4: No measurement was taken because it gelled and no graft copolymer was obtained; P-19: Sodium salt of P-1; P-20: Sodium salt of P-3; P-21: Sodium salt of P-6; P-22: Sodium salt of P-11 P-23: Sodium salt of P017 B-1: α-allyl-ω-acetyl-polyoxyethylene (n=30); B-2: α-allyl-ω-acetyl-polyoxyethylene (n=50); B-3: α-allyl-ω-acetyl-polyoxyethylene (n=17); B-4: α-allyl-ω-lauroyl-polyoxyethylene (n=60); B-5: α-allyl-ω-methyl-polyoxyethylene (n=35); B-6: α-allyl-ω-hydroxy-polyoxyethylene (n=60) polyoxypropylene (m=5); B-7: α-allyl-ω-acetyl-polyoxyethylene (n=50) polyoxypropylene (m=5); BR-1: α-allyl-ω-methyl-polyoxyethylene (n=95); C-1: Styrene: D-1: α-butyroyl-ω-hydroxy-dioxyethylene dioxypropylene; D-2: α-propionoyl-ω-hydroxy-dioxyethylene trioxypropylene; D-3: α-butyl-ω-hydroxy-dioxyethylene dioxypropylene; D-4: Polypropyleneglycol (m=7); D-5: Polypropyleneglycol (m=10); D-6: Polypropyleneglycol (m=4); DR-1: α-lauroyl-ω-hydroxy-polyoxyethylene (n=5) polyoxypropylene (m=2); DR-2: α-butyloyl-ω-hydroxy-polyoxyethylene (n=4); DR-3: α-octyl-ω-hydroxy-polyoxyethylene (n=5); DR-4: Polypropyleneglycol (m=18) DR-5: Dipropyleneglycol; DR-6: Polyethylenglycol (n=7). | | | | | | | | |

### Part 2 (Preparation and Evaluation of Concrete)

### Preparation of Concrete

Concrete samples to be tested were prepared as follows under the conditions shown in Table 2. Normal portland cement (specific weight = 3.16; braine value = 3300), fine aggregates (Ooi-gawa River sand with specific weight = 2.63) and coarse aggregates (crushed stones from Okazaki with specific weight = 2.66) were sequentially added into a pan-type forced kneading mixer with capacity 50 liters and subjected to a free kneading process for 15 seconds. Next, a multi-functional cement dispersant comprising graft copolymer or salt of graft copolymer synthesized or prepared in Part 1 was added and kneaded together such that the slump would be within a target range of 18±1cm and the air content within a target range of 4.5±1% and an agent for controlling air content was added with water with kneading for 90 seconds.

**Table 2**

| Water/cement ratio (%) | Ratio of fine aggregates (%) | Unit amount (kg/m³) | | | |
|---|---|---|---|---|---|
| | | Water | Cement | Fine aggregates | Coarse aggregates |
| 50 | 49 | 163 | 326 | 862 | 951 |

### Evaluation of Concrete Samples

For each of the tested concrete samples, the air content, slump, slump loss, dry shrinkage, index of resistance against freezing and thawing and compression strength were obtained as explained below. The beginning and end of setting were also determined. These results are summarized below in Tables 3 and 4.

Air content: After the tiltable mixer containing the sample concrete is rotated for 60 or 90 minutes at a rotary speed of 2rpm, like that of a container for ready-mixed concrete, the concrete was discharged into a mixing container and measured according to JIS-A1128 (Japanese Industrial Standard).

Slump: Measured according to JIS-A1101 at the same time as the measurement of the air content.

Slump loss: Calculated as the percentage of the slump after 90 minutes with respect to the slump immediately after preparation.

Dry shrinkage: Calculated by storing each sample under the condition of 20°C and 60%RH and measuring the sample at ages of 13 weeks and 26 weeks by a comparator method according to JIS-A1129. The smaller the number, the smaller the dry shrinkage.

Index of resistance against freezing and thawing: Obtained by measurement according to Supplement 2 of JIS-A1129 and presented as durability index according to ASTM-C666-75. The maximum value of the index is 100. The closer the index to 100, the better is the resistance against freezing and thawing.

Compressive Strength: Measured at ages 3 days and 28 days according to JIS-A1108.

**Table 3**

| | Graft Copolymer | | Immediately after (t=0) | | After 60 minutes (t=60) | | After 90 minutes (t=90) | | Slump Loss (%) |
|---|---|---|---|---|---|---|---|---|---|
| | Kind | Amt | Slump (cm) | Air (%) | Slump (cm) | Air (%) | Slump (cm) | Air (%) | |
| Test | | | | | | | | | |
| Example | | | | | | | | | |
| 24 | P-1 | 0.16 | 18.5 | 4.7 | 17.7 | 4.5 | 17.1 | 4.4 | 924 |
| 25 | P-2 | 0.17 | 18.2 | 4.5 | 17.5 | 4.4 | 16.8 | 4.2 | 92.3 |
| 26 | P-3 | 0.20 | 18.6 | 4.5 | 18.0 | 4.5 | 17.5 | 4.6 | 94.1 |
| 27 | P-4 | 0.17 | 18.6 | 4.6 | 17.4 | 4.5 | 17.0 | 4.5 | 91.4 |
| 28 | P-5 | 0.15 | 18.5 | 4.4 | 17.2 | 4.3 | 17.0 | 4.3 | 91.9 |
| 32 | P-9. | 0.20 | 18.6 | 4.6 | 17.6 | 4.5 | 16.7 | 4.3 | 89.8 |
| 33 | P-10 | 0.23 | 18.7 | 4.5 | 17.4 | 4.6 | 16.5 | 4.2 | 88.2 |
| 34 | P-11 | 0.21 | 18.6 | 4.6 | 17.7 | 4.4 | 17.2 | 4.3 | 92.5 |
| 35 | P-12 | 0.24 | 18.4 | 4.5 | 18.5 | 4.5 | 17.9 | 4.4 | 97.3 |
| 36 | P-13 | 0.19 | 18.7 | 4.6 | 17.3 | 4.6 | 16.9 | 4.5 | 90.4 |
| 37 | P-14 | 0.23 | 18.5 | 4.5 | 17.7 | 4.3 | 17.2 | 4.3 | 93.0 |
| 38 | P-15 | 0.21 | 18.4 | 4.6 | 18.0 | 4.6 | 17.7 | 4.7 | 96.2 |
| 39 | P-16 | 0.28 | 18.2 | 4.4 | 17.8 | 4.4 | 17.6 | 4.2 | 96.7 |
| 40 | P-17 | 0.23 | 18.6 | 4.6 | 17.3 | 4.5 | 17.2 | 4.4' | 92.5 |
| 42 | P-19 | 0.18 | 18.4 | 4.7 | 17.6 | 4.5 | 17.0 | 4.4 | 92.4 |
| 43 | P-20 | 0.21 | 18.5 | 4.5 | 18.1 | 4.5 | 17.4 | 4.6 | 94.1 |
| 45 | P-22 | 0.22 | 18.6 | 4.4 | 17.5 | 4.4 | 17.0 | 4.2 | 91.4 |
| 46 | P-23 | 0.24 | 18.4 | 4.6 | 17.7 | 4.5 | 17.2 | 4.4 | 93.5 |

| Comparison | | | | | | | | | |
|---|---|---|---|---|---|---|---|---|---|
| Example | | | | | | | | | |
| 16 | R-1 | 0.18 | 18.5 | 4.5 | 14.0 | 4.3 | 10.0 | 4.0 | 54.1 |
| 17 | R-2 | 0.32 | 18.2 | 4.6 | 17.1 | 4.4 | 14.1 | 4.3 | 77.5 |
| 18 | R-3 | 0.26 | 18.7 | 4.4 | 16.5 | 4.6 | 13.3 | 4.8 | 71.1 |
| 19 | R-4 | 0.25 | 18.4 | 4.4 | 16.3 | 4.5 | 13.0 | 4.7 | 70.7 |
| 20 | R-5 | 0.29 | 18.6 | 4.7 | 15.6 | 4.4 | 12.4 | 4.4 | 66.7 |
| 21 | R-6 | 0.38 | 18.3 | 4.6 | 15.8 | 4.4 | 12.7 | 4.3 | 69.4 |
| 22 | R-7 | 0.30 | 18.7 | 4.4 | 17.0 | 4.3 | 14.2 | 4.5 | 75.9 |
| 23 | R-8 | 0.18 | 18.7 | 4.7 | 14.2 | 4.3 | 10.4 | 4.1 | 55.6 |
| 24 | R-9 | 0.19 | 18.3 | 4.4 | 15.3 | 4.2 | 11.5 | 4.0 | 62.8 |
| 25 | R-10 | 0.64 | 18.0 | 4.3 | 12.5 | 4.3 | 9.5 | 4.2 | 52.7 |
| 26 | R-11 | 0.23 | 18.2 | 4.5 | 15.8 | 4.4 | 11.8 | 4.2 | 64.8 |
| 27 | R-12 | 0.20 | 18.6 | 4.4 | 14.9 | 4.2 | 10.6 | 4.0 | 57.0 |
| 28 | R-14 | 0.32 | 18.3 | 4.6 | 15.0 | 4.4 | 12.4 | 4.3 | 67.8 |
| 29 | R-15 | 0.28 | 18.6 | 4.5 | 15.0 | 4.3 | 11.3 | 4.1 | 60.7 |
| 30 | *5 | 0.20 | 18.6 | 4.5 | 15.2 | 4.2 | 11.9 | 4.1 | 64.0 |

| | | | | | | | | | |
|---|---|---|---|---|---|---|---|---|---|
| In Table 3: Amt: Added amount converted to solid component against 100 parts of cement; *5: Polycarboxylic acid cement dispersant (CHUPOL HP-11 produced by Takemoto Yushi Kabushiki Kaisha) | | | | | | | | | |

**Table 4**

| | Setting (minute) | | Dry Shrinkage Ratio (x10⁻⁴) | | Freezing and Thawing Resistance Index (300 cycles) | Compressive Strength (N/mm²) | |
|---|---|---|---|---|---|---|---|
| | Start | End | Material Age 13 weeks | Material Age 26 weeks | | Material Age 3 Days | Material Age 2% Days |
| Test | | | | | | | |
| Example | | | | | | | |
| 24 | 385 | 520 | 5.8 | 6.6 | 95.5 | 8.4 | 44.5 |
| 25 | 400 | 535 | 5.9 | 6.6 | 94.0 | 8.3 | 43.8 |
| 26 | 360 | 480 | 6.0 | 6.9 | 97.0 | 8.6 | 44.3 |
| 27 | 415 | 550 | 5.6 | 6.3 | 92.2 | 7.9 | 44.9 |
| 28 | 350 | 475 | 5.7 | 6.6 | 93.4 | 8.8 | 44.5 |
| 32 | 410 | 550 | 6.0 | 7.0 | 90.8 | 7.8 | 44.3 |
| 33 | 430 | 565 | 6.0 | 7.2 | 91.0 | 8.0 | 44.0 |
| 34 | 390 | 530 | 5.7 | 6.5 | 93.0 | 8.2 | 44.2 |
| 35 | 410 | 540 | 5.5 | 6.4 | 91.3 | 7.9 | 44.0 |
| 36 | 370 | 485 | 6.0 | 6.9 | 95.5 | 8.5 | 44.5 |
| 37 | 430 | 565 | 5.9 | 6.8 | 92.0 | 7.2 | 43.1 |
| 38 | 365 | 490 | 5.6 | 6.6 | 96.2 | 8.4 | 44.3 |
| 39 | 360 | 485 | 5.7 | 6.7 | 92.4 | 8.5 | 44.5 |
| 40 | 400 | 536 | 5.8 | 6.9 | 92.0 | 8.2 | 44.3 |
| 42 | 386 | 521 | 5.8 | 6.5 | 95.6 | 8.4 | 44.5 |
| 43 | 360 | 480 | 6.1 | 6.8 | 96.8 | 8.7 | 44.3 |
| 45 | 405 | 540 | 5.6 | 6.5 | 93.6 | 8.6 | 44.8 |
| 46 | 410 | 540 | 5.9 | 7.0 | 94.0 | 8.0 | 44.0 |

| Comparison | | | | | | | |
|---|---|---|---|---|---|---|---|
| Example | | | | | | | |
| 16 | 450 | 610 | 7.3 | 8.5 | 63.5 | 4.2 | 42.0 |
| 17 | 435 | 570 | 6.1 | 7.2 | 55.6 | 7.7 | 43.5 |
| 18 | 415 | 550 | 7.1 | 8.0 | 57.5 | 7.5 | 43.2 |
| 19 | 440 | 590 | 7.2 | 8.4 | 30.0 | 5.8 | 43.0 |
| 20 | 480 | 650 | 7.0 | 8.2 | 49.0 | 3.1 | 42.5 |
| 21 | 460 | 625 | 7.2 | 8.3 | 65.5 | 4.0 | 42.6 |
| 22 | 445 | 580 | 7.3 | 8.6 | 61.5 | 6.0 | 43.1 |
| 23 | 480 | 660 | 7.6 | 8.8 | 68.5 | 3.0 | 41.5 |
| 24 | 455 | 615 | 7.3 | 8.5 | 64.0 | 4.3 | 42.3 |
| 25 | 670 | 780 | 6.2 | 7.2 | 35.0 | 2.1 | 37.7 |
| 26 | 420 | 560 | 7.0 | 8.1 | 70.3 | 7.3 | 42.8 |
| 27 | 415 | 545 | 6.7 | 7.6 | 48.0 | 7.5 | 43.0 |
| 28 | 470 | 650 | 6.3 | 7.2 | 55.5 | 3.4 | 42.0 |
| 29 | 440 | 605 | 6.6 | 7.5 | 63.0 | 4.0 | 42.2 |
| 30 | 380 | 510 | 7.1 | 8.0 | 82.0 | 8.3 | 43.6 |

As should be clear from the description given above, cement dispersants according to this invention can provide hydraulic cement compositions with superior fluidity with a reduced loss with the time and hardened objects produced from such hydraulic cement compositions exhibit a superior early strength, a low dry shrinkage and a high resistance against freezing and thawing.

## Claims

1. A cement dispersant comprising graft copolymers obtainable by;
a first step of obtaining copolymers with number average molecular weight of from 3000 to 50000 by radical polymerisation of a mixture of radical polymerizable monomers consisting of maleic anhydride and monomers of form given by Formula 1 below, together in an amount of 85 molar % or more of said mixture and at molar ratio of from 50/50 to 80/20; and
a second step of obtaining said graft copolymers by a graft reaction, in the presence of a basic catalyst, of 100 weight parts of said copolymers obtained in said first step and 3-35 weight parts of one or more selected from the group consisting of poly(oxyalkylene) monoalkylester, poly(oxyalkylene) monoalkylether and poly(propyleneglycol) with repetition number of oxypropylene units equal to 4-10;
CH₂=CH-CH₂-O-A-O-R (Formula 1)
where R is an acyl group with 1-18 carbon atoms, an alkyl group with 1-3 carbon atoms or hydrogen, and A is a residual group obtained by removing all hydroxyl groups from poly(alkylene glycol) with repetition number of oxyalkylene units equal to 5-80, said oxyalkylene units consisting only of oxyethylene units or of both oxyethylene units and oxypropylene units;
where said poly(oxyalkylene) monoalkylester has a block addition of 1-4 moles of ethylene oxide and 1-4 moles of propylene oxide to one mole of aliphatic carboxylic acid with 1-6 carbon atoms; and
where said poly(oxyalkylene) monoalkylether has a block addition of 1-4 moles of ethylene oxide and 1-4 moles of propylene oxide to one mole of aliphatic alcohol with 3-5 carbon atoms.

2. A cement dispersant comprising salts of graft copolymers obtainable by:
obtaining graft copolymers as defined in Claim 1 and in a third step, obtaining said salts of graft copolymers by neutralizing said graft copolymers with one or more selected from the group consisting of alkali metal hydroxide, alkali earth metal hydroxide and amines.

3. A cement dispersant according to Claim 1 or Claim 2, wherein copolymers with number average molecular weight of from 5000 to 25000 are obtained in said first step by radical polymerisation of said mixture of radical polymerizable monomers without using any solvent.

4. A cement dispersant according to any of Claims 1 to 3, wherein R of Formula 1 is an acyl group with 1-18 carbon atoms, A is a residual group obtained by removing all hydroxyl groups from poly(ethyleneglycol) with repetition number of oxyethylene units equal to 15-70.

5. A cement dispersant according to any of Claims 1 to 4, wherein in said second step said graft copolymers are obtained by a graft reaction of 5-25 weight parts of one or more selected from the group consisting of poly(oxyalkylene) monoalkylester, poly(oxyalkylene) monoalkylether and poly(propyleneglycol) to 100 weight parts of the copolymer obtained in said first step.

6. A cement dispersant according to any of Claims 1 to 5, wherein the basic catalyst of said second step is an amine catalyst.

7. A cement dispersant according to any of Claims 1 to 6, wherein a 40 weight % aqueous solution of said graft copolymers obtained in said second step has viscosity 60-700MPa·s at 20°C.

8. A hydraulic cement composition comprising from 0.05 to 4.0 weight parts of a cement dispersant according to any of Claims 1 to 7 per 100 weight parts of cement.

## Patentansprüche

1. Zementdispergiermittel, das Pfropfcopolymere enthält, welche durch die nachfolgenden Schritte erzielt werden können:
einen ersten Schritt zum Erzielen von Copolymeren mit einem zahlengemittelten Molekulargewicht von 3000 bis 50000 durch eine Radikalpolymerisation von einer Mischung aus radikalpolymerisierbaren Monomeren, die aus Maleinsäureanhydrid und aus Monomeren von der Form wie sie durch die nachstehende Formel 1 angezeigt wird bestehen, zusammen in einer Menge von 85 Molarprozent oder mehr von dieser Mischung und bei einem molaren Verhältnis von zwischen 50/50 bis zu 80/20; sowie
einen zweiten Schritt zum Erzielen der Pfropfcopolymere durch eine Pfropfreaktion, in Gegenwart eines basischen Katalysators, von 100 Gewichtsteilen der in dem ersten Schritt erhaltenen Copolymere und von 3-35 Gewichtsteilen von einer oder von mehreren Verbindungen, die ausgewählt werden aus der Gruppe bestehend aus Poly(oxyalkylen)monoalkylester, Poly(oxyalkylen)monoalkylether und Poly(propylenglycol) mit einer Wiederholungsanzahl von Oxypropyleneinheiten, welche gleich ist mit 4-10;
CH₂=CH-CH₂-O-A-O-R (Formel 1)
in welcher R eine Acylgruppe mit 1-18 Kohlenstoffatomen, eine Alkylgruppe mit 1-3 Kohlenstoffatomen oder ein Wasserstoffatom ist, und A eine Restgruppe darstellt, die man erhält durch ein Entfernen von allen Hydroxylgruppen aus dem Poly(alkylenglycol) mit einer Wiederholungsanzahl von Oxyalkyleneinheiten von gleich 5-80, wobei die Oxyalkyleneinheiten lediglich aus Oxyethyleneinheiten oder sowohl aus Oxyethyleneinheiten als auch aus Oxypropyleneinheiten bestehen;
wobei der Poly(oxyalkylen)monoalkylester eine Blockaddition von 1-4 Molen Ethylenoxid und von 1-4 Molen Propylenoxid gegenüber einem Mol aliphatischer Carboxylsäure mit 1-6 Kohlenstoffatomen aufweist; und
wobei der Poly(oxyalkylen)monoalkylether eine Blockaddition von 1-4 Molen Ethylenoxid und von 1-4 Molen Propylenoxid gegenüber einem Mol aliphatischem Alkohol mit 3-5 Kohlenstoffatomen aufweist.

2. Zementdispergiermittel, das Salze von Pfropfcopolymeren enthält, welche erzielt werden können durch:
ein Erzielen von Pfropfcopolymeren gemäß Anspruch 1 und durch einen dritten Schritt, bei welchem die Salze von Pfropfcopolymeren durch ein Neutralisieren der Pfropfcopolymere mit einer oder mit mehreren Verbindungen erzeugt werden, welche ausgewählt werden aus der Gruppe bestehend aus Alkalimetallhydroxid, Erdalkalimetallhydroxid und aus Aminen.

3. Zementdispergiermittel gemäß 1 Anspruch oder Anspruch 2, bei welchem Copolymere mit einem zahlengemittelten Molekulargewicht von 5000 bis 25000 in dem ersten Schritt durch eine Radikalpolymerisation der Mischung aus radikalpolymerisierbaren Monomeren ohne Verwendung irgendeines Lösungsmittels erzielt werden.

4. Zementdispergiermittel gemäß irgendeinem der Ansprüche 1 bis 3, bei welchem R aus der Formel 1 eine Acylgruppe mit 1-18 Kohlenstoffatomen ist und A eine Restgruppe darstellt, welche man erhält durch ein Entfernen von allen Hydroxylgruppen aus dem Poly(ethylenglycol) mit einer Wiederholungsanzahl von Oxyethyleneinheiten, welche gleich ist mit 15-70.

5. Zementdispergiermittel gemäß irgendeinem der Ansprüche 1 bis 4, bei welchem in dem zweiten Schritt die Pfropfcopolymere erzielt werden durch eine Pfropfreaktion von 5-25 Gewichtsteilen von einer oder von mehreren Verbindungen, die ausgewählt werden aus der Gruppe bestehend aus Poly(oxyalkylen)monoalkylester, Poly(oxyalkylen)monoalkylether und Poly(propylenglycol), gegenüber bis zu 100 Gewichtsteilen von dem in dem ersten Schritt erzielten Copolymer.

6. Zementdispergiermittel gemäß irgendeinem der Ansprüche 1 bis 5, bei welchem der basische Katalysator des zweiten Schrittes aus einem Aminkatalysator besteht.

7. Zementdispergiermittel gemäß irgendeinem der Ansprüche 1 bis 6, bei welchem eine 40 Gewichtsprozent wässrige Lösung der in dem zweiten Schritt erzielten Pfropfcopolymere eine Viskosität von 60-700 MPa bei 20°C aufweist.

8. Hydraulische Zementzusammensetzung, die von 0,05 bis zu 4,0 Gewichtsteile eines Zementdispergiermittels gemäß irgendeinem der Ansprüche 1 bis 7 pro 100 Gewichtsteile Zement enthält.

## Revendications

1. Dispersant pour ciment comprenant des copolymères greffés pouvant être obtenus par:
une première étape d'obtention de copolymères avec un poids moléculaire moyen en nombre de 3000 à 50000 par une polymérisation par radicaux d'un mélange de monomères polymérisables par radiaux constitué d'anhydride maléique et de monomères de la forme donnée par la Formule 1 ci-dessous, ensemble dans une quantité de 85% molaire ou plus dudit mélange et à un rapport molaire de 50/50 à 80/20; et
une deuxième étape d'obtention desdits copolymères greffés par une réaction de greffage, en présence d'un catalyseur basique, de 100 parties en poids desdits copolymères obtenus dans ladite première étape et de 3-35 parties en poids d'un ou de plusieurs choisis dans le groupe constitué de poly(oxyalkylène) monoalkylester, de poly(oxyalkylène) monoalkyléther et de poly(propylèneglycol) avec un nombre de répétition d'unités d'oxypropylène égal à 4-10;
CH₂=CH-CH₂-O-A-O-R (Formule 1)
où R est un groupe acyle avec 1-18 atomes de carbone, un groupe alkyle avec 1-3 atomes de carbone ou un hydrogène, et A est un groupe résiduel obtenu en retirant tous les groupes hydroxyles d'un poly(alkylèneglycol) avec un nombre de répétition d'unités d'oxyalkylène égal à 5-80, lesdites unités d'oxyalkylène étant constituées seulement d'unités d'oxyéthylène ou à la fois d'unités d'oxyéthylène et d'unités d'oxypropylène;
où ledit poly(oxyalkylène) monoalkylester présente une addition de blocs de 1-4 moles d'éthylène oxyde et de 1-4 moles de propylène oxyde pour une mole d'acide carboxylique aliphatique avec 1-6 atomes de carbone; et
où ledit poly(oxyalkylène) monoalkyléther présente une addition de blocs de 1-4 moles d'éthylène oxyde et de 1-4 moles de propylène oxyde pour une mole d'alcool aliphatique avec 3-5 atomes de carbone.

2. Dispersant pour ciment comprenant des sels de copolymère greffés pouvant être obtenus par:
l'obtention des copolymères greffés suivant la revendication 1 et, dans une troisième étape, l'obtention desdits sels de copolymères greffés par la neutralisation desdits copolymères greffés avec un ou plusieurs choisis dans le groupe constitué d'hydroxyde de métal alcalin, d'hydroxyde de métal alcalino-terreux et d'amines.

3. Dispersant pour ciment suivant la revendication 1 ou la revendication 2, dans lequel des copolymères avec un poids moléculaire moyen en nombre de 5000 à 25000 sont obtenus dans ladite première étape par une polymérisation par radicaux dudit mélange de monomères polymérisables par radicaux sans utiliser aucun solvant.

4. Dispersant pour ciment suivant l'une quelconque des revendications 1 à 3, dans lequel R de la Formule 1 est un groupe acyle avec 1-18 atomes de carbone, A est un groupe résiduel obtenu par le retrait de tous les groupes hydroxyles d'un poly(éthylèneglycol) avec un nombre de répétition d'unités d'oxyéthylène égal à 15-70.

5. Dispersant pour ciment suivant l'une quelconque des revendications 1 à 4, dans lequel, dans ladite deuxième étape, lesdites copolymères greffés sont obtenus par une réaction de greffage de 5-25 parties en poids d'un ou de plusieurs choisis dans le groupe constitué de poly(oxyalkylène) monoalkylester, de poly(oxyalkylène) monoalkyléther et de poly(propylèneglycol) pour 100 parties en poids du copolymère obtenu dans ladite première étape.

6. Dispersant pour ciment suivant l'une quelconque des revendications 1 à 5, dans lequel le catalyseur basique de ladite deuxième étape est un catalyseur d'amine.

7. Dispersant pour ciment suivant l'une quelconque des revendications 1 à 6, dans lequel une solution aqueuse de 40% en poids desdits copolymères greffés obtenus dans ladite deuxième étape possède une viscosité de 60-700 MPa.s à 20°C.

8. Composition de ciment hydraulique comprenant de 0,05 à 4,0 parties en poids d'un dispersant pour ciment suivant l'une quelconque des revendications 1 à 7 pour 100 parties en poids de ciment.
